# EUROPÄISCHE PATENTSCHRIFT

(11) **EP 3 545 059 B1**
(45) Veröffentlichungstag und Bekanntmachung des Hinweises auf die Patenterteilung: **04.08.2021**
(21) Anmeldenummer: 17808839.9
(22) Anmeldetag: 22.11.2017
(51) Int. Cl.: C10M 169/04

(54) **GLEITMATERIAL AUF POLYAMIDBASIS**
POLYAMIDE BASED MATERIAL FOR SLIDING BEARING
MATÉRIAU POUR UN ROULEMENT COULISSANT À BASE DE POLYAMIDE

(30) Priorität: 22.11.2016 DE 102016122476; 22.11.2016 DE 102016122475
(43) Veröffentlichungstag der Anmeldung: 02.10.2019
(73) Patentinhaber: KS Gleitlager GmbH, 68789 St. Leon-Rot (DE)
(72) Erfinder: REINICKE, Rolf, 76669 Bad Schoenborn (DE); BICKLE, Ruediger, 68799 Reilingen (DE); DICK, Steffen, 67659 Kaiserslautern (DE)
(74) Vertreter: DREISS Patentanwälte PartG mbB
(86) Internationale Anmeldenummer: PCT/EP2017/080094
(87) Internationale Veröffentlichungsnummer: WO 2018/095982

(56) Entgegenhaltungen:
- EP-A1- 2 677 021
- DE-A1-102008 026 519
- US-A1- 2011 082 059
- US-A1- 2014 106 914

## Beschreibung

Die Erfindung betrifft ein Gleitmaterial auf Polyamidbasis mit die tribologischen Eigenschaften verbessernden Füllstoffen.

Im Stand der Technik sind Gleitmaterialien, die Polyamide verwenden, bekannt. So wird beispielsweise ungefülltes Polyamid 4.6 eingesetzt, das jedoch für kritische Anwendungen im Nutzfahrzeugbereich nicht verschleißfest genug ist.

Darüber hinaus sind eine Vielzahl von Gleitmaterialien bekannt, die beispielsweise auf PTFE-Basis beruhen und Polyamid lediglich als Füllstoff verwenden.

Etwas Entsprechendes ist beispielsweise in der DE 10 2011 077 008 A1 beschrieben, die einen Gleitlagerverbundwerkstoff auf PTFE-Basis beschreibt, bei der Füllstoffe umfassend Thermoplaste und/oder Duroplaste und weitere tribologisch wirksame Stoffe zusammen in compoundierter Form in der Polymerbasis des Gleitschichtmaterials vorliegen.

Den Einsatz von Polyamiden als Festschmierstoffe in lösungsmittelfreien Polyamidimidgleitlacken auf Wasserbasis hat die DE 10 2013 021 949 A1 zum Gegenstand.

US 2014/0106914 A1 offenbart ein Gleitmaterial auf Polyamidbasis enthaltend 70-99,99 Gewichtsprozent Polyamid und 0,01 - 30 Gewichtsprozent dispergierte anorganische Füllstoffe ausgewählt aus einer Liste enthaltend zum Beispiel MoS₂.

Ausgehend von diesem Stand der Technik war es nun Aufgabe der Erfindung, die tribologischen Eigenschaften und insbesondere die Verschleißfestigkeit von Gleitmaterialien auf Polyamidbasis zu verbessern.

Diese Aufgabe wird durch ein Gleitmaterial auf Polyamidbasis, mit die tribologischen Eigenschaften verbessernden Füllstoffen gelöst, bei dem die Füllstoffe ein oder mehrere Metallsulfide und Calciumphosphat umfassen und dass der Anteil an dem mindestens einen Metallsulfid und Calciumphosphat in Summe 1 - 30 Gew.-% des Gleitmaterials beträgt und dass die Gewichtsverhältnisse von Calciumphosphat zu Metallsulfid zwischen 5:1 und 1:1 betragen.

Darüber hinaus betrifft die Erfindung einen Gleitlagerverbundwerkstoff nach Anspruch 14 sowie einen dreidimensionalen Formkörper nach Anspruch 15 und ein Gleitelement nach Anspruch 16.

Dabei hat sich überraschenderweise herausgestellt, dass der Zusatz von einem oder mehreren Metallsufiden und Calciumphosphat zur Polyamidbasis die Verschleißfestigkeit des Gleitmaterials signifikant verbessert. Das vorliegende Gleitmaterial eignet sich dabei insbesondere für Verwendungen außerhalb des Motors im Automobilbereich, insbesondere in fettgeschmierten Systemen, wie Nutzfahrzeugbremssystemen, Achsschenkellagerungen, etc. Bei derartigen Anwendungen besteht der Wunsch, bleifreie Gleitmaterialien einzusetzen. Das vorliegende Gleitmaterial stellt nun ein Material bereit, das eine ausreichende Verschleißfestigkeit aufweist.

Beim erfindungsgemäßen Gleitmaterial wird eine Polyamidbasis als Polymerbasis verwendet. Dies bedeutet nicht zwingend, dass die gesamte Polymerbasis aus Polyamid bestehen muss. Anteile bis zu 30 Gew.-% des Polymeranteils, insbesondere bis 20 Gew.-% und vorzugsweise nur bis 10 Gew.-% der Polyamidbasis können durch andere Polymere und Kombinationen daraus, wie insbesondere PTFE, aber auch z. B. PVDF, PFA, FEP, ECTFE, ETFE ersetzt sein. Vorzugsweise besteht die gesamte Polyamidbasis zu 100 Gew.-% aus Polyamid

Nach einer besonders bevorzugten Ausführungsform ist vorgesehen, dass die Polyamidbasis PA 4.6 umfasst und insbesondere zu mindestens 60 Gew.-%, insbesondere zu mindestens 70 Gew.-%, insbesondere mindestens zu 80 Gew.-%, insbesondere zu mindestens 90 Gew.-% und insbesondere zu 100 Gew.-% aus PA 4.6 besteht.

Daneben können zur weiteren Verbesserung der Eigenschaften des Gleitmaterials, insbesondere zur besseren Compoundierbarkeit der Materialien, zwischen 0 Gew.-% und 40 Gew.-%, insbesondere 1 Gew.-% bis 30 Gew.-% und insbesondere 5 Gew.-% bis 20 Gew.-% weitere von PA 4.6 verschiedene Polyamide eingesetzt werden, insbesondere PA 6 und/oder PA 6.6.

Besonders vorteilhafte Eigenschaften ergeben sich, wenn der Anteil an dem einen oder mehreren Metallsulfiden und Calciumphosphat in Summe 1 Gew.-% bis 20 Gew.-% und insbesondere 5 Gew.-% bis 15 Gew.-%, insbesondere 10 Gew.-% des Gleitmaterials beträgt. Je nach konkreter Auswahl der Füllstoffe kann es auch besonders bevorzugt sein, wenn der Anteil aus Calciumphosphat und Metallsulfiden 5 Gew.-% beträgt bezogen auf das Gleitmaterial. Dabei beträgt der Anteil des mindestens einen Metallsulfids vorzugsweise 1 bis 50 Gew.-% und von Calciumphosphat 50 bis 99 Gew.-% an der Mischung aus Metallsufid und Calciumphosphat. Insbesondere beträgt der Anteil an Metallsulfid 3 bis 40 Gew.-% und von Calciumphosphat von 60 bis 97 Gew.-%. Weiter insbesondere beträgt der Anteil an Metallsulfid 5 bis 30 Gew.-% und von Calciumphosphat von 70 bis 95 Gew.-%.

Besonders bevorzugt können Mischungen aus Calciumphosphat und einem oder mehreren Metallsulfiden, insbesondere MoS₂, SnS₂, WS₂ oder Bismutsulfid sowie Kombinationen der vorgenannten eingesetzt werden.

Als besonders bevorzugt haben sich Füllstoffe folgender Zusammensetzung erwiesen:
2-20 Gew.-% SnS₂,
70-97 Gew.-% Calciumphosphat
1-10 Gew.-% WS₂.

Dabei beziehen sich die Gewichtsangaben auf die Summe der Gewichte der drei Füllstoffe. Die Summe der Anteile ergibt dabei 100 Gew.-%. Von dieser Zusammensetzung können dann 1 Gew.-% bis 30 Gew.-%, insbesondere 1 Gew.-% bis 20 Gew.-% und insbesondere 5 Gew.-% bis 15 Gew.-%, insbesondere 10 Gew.-% im Gleitmaterial eingesetzt werden, bezogen auf das Gewicht des Gleitmaterials. Je nach konkreter Auswahl der Füllstoffe kann es auch besonders bevorzugt sein, wenn der Anteil aus Calciumphosphat und Metallsulfiden 5 Gew.-% beträgt bezogen auf das Gewicht des Gleitmaterials.

Eine weitere besonders bevorzugte Zusammensetzung an Füllstoffen sind
50 Gew.-% Calciumphosphat
50 Gew.-% WS₂
bezogen auf die Summe der Gewichte der beiden Füllstoffe der Zusammensetzung.

Besonders bevorzugt sind dabei Gewichtsverhältnisse Calciumphosphat zu Metallsulfid von 5:1 bis 1:1.

Für eine bevorzugte Zusammensetzung der Füllstoffe von SnS₂ / Calciumphosphat / WS₂ (bezogen auf WS₂) ergeben sich bevorzugte Anteile wie folgt:
1-3 SnS₂,
9-13 Calciumphosphat
1 WS₂, und insbesondere
1,67 SnS₂,
11 Calciumphosphat
1 WS₂.

Alternativ besonders bevorzugt sind als Füllstoffe Calciumphosphat und WS₂ im Verhältnis von 1:1.

Derartige Füllstoffzusammensetzungen bieten besonders gute tribologische Eigenschaften.

Darüber hinaus ist es auch vorgesehen, nur Metallsulfide, insbesondere WS₂ als Füllstoff einzusetzen, insbesondere mit einem Anteil von 10% Gew.-% bezogen auf das Gleitmaterial.

Darüber hinaus können die Füllstoffe weitere tribologisch wirksame Stoffe umfassen, z.B. Verstärkungsstoffe, wie insbesondere Kohlenstofffasern, Glasfasern, Polymerfasern (insbesondere Aramidfasern); und/oder Festschmierstoffe, wie insbesondere PTFE, ZnS, BaSO₄, Graphit, Ruß, BN und/oder Kunststoffpartikel, wie insbesondere Aramid (PPTA)-, PPSO₂-, PI- und PAI-Partikel, Polyacrylatpartikel (PAR), PBA-Partikel, PBI-Partikel; und/oder Metalloxide, wie insbesondere Fe₂O₃, Al₂O₃, SiO₂, CrO₂, TiO₂, CuO, MgO, ZnO; und/oder Hartstoffpartikel, insbesondere keramische Partikel, wie SiC, Si₃N₄, BC, cubisches BN; und/oder Fluoride, wie insbesondere CaF₂, NaF, AlF₃; und/oder Schichtsilikate, wie insbesondere Kaolin, Glimmer, Wollastonit, Talkum, gefällte Kreide, Kieselsäure; und/oder metallische Feinpulver, wie insbesondere Bronze und Wismut; und/oder Pigmente oder Mischphasenoxidpigmente, wie insbesondere Co-Al, Cr-Sb-Ti, Co-Ti, Fe-Al oder Co-Cr.

Dabei ist es besonders bevorzugt, wenn der Anteil der weiteren tribologisch wirksamen Stoffe 0 Gew.-% bis 40 Gew.-%, insbesondere 1 Gew.-% bis 20 Gew.-%, insbesondere 1 Gew.-% bis 10 Gew.-%, insbesondere 5 Gew.-% des Gleitmaterials beträgt. Besonders bevorzugt ist dabei die Verwendung von Schichtsilikaten, insbesondere Kaolin und/oder Wollastonit und /oder Talkum, und/oder Festschmierstoffen, insbesondere BaSo₄ und/oder ZnS.

Weiterhin ist besonders bevorzugt vorgesehen, dass die Polyamidbasis 50 Gew.- bis 95 Gew.-%, insbesondere 60 Gew.-% bis 95 Gew.-% und insbesondere 70 Gew.-% bis 90 Gew.-% des Gleitmaterials umfasst. Auf diese Weise können die Eigenschaften des Polyamidmaterials das Gleitmaterial in hinreichender Weise beeinflussen.

Das Gleitmaterial kann dabei zur Herstellung eines Gleitlagerverbundwerkstoffs dienen mit einer metallischen Stützschicht, insbesondere aus Stahl oder Bronze, optional mit einer porösen Trägerschicht, insbesondere aus Bronze und mit einem die Poren der Trägerschicht ausfüllenden Gleitmaterial der vorstehend beschriebenen Art. Hierzu wird das Gleitmaterial mit seinen Füllstoffen in ein folienartiges Flachmaterial extrudiert und dieses Flachmaterial wird auf eine metallische Stützschicht aufgebracht, bzw. in die Poren der porösen Trägerschicht einimprägniert, wobei hierfür vorzugsweise ein Heißpressprozess und/oder ein Walzvorgang eingesetzt wird.

Darüber hinaus umfasst die Erfindung auch einen dreidimensionalen Formkörper zur gleitenden Beanspruchung bestehend aus einem Gleitmaterial der vorstehend beschriebenen Art, der insbesondere als Spritzguss- oder Extrusionsteil hergestellt ist. Der Formkörper kann darüber hinaus an ein Trägerteil aus einem anderen Material angefügt, insbesondere an dieses angespritzt sein. Es sind aber auch mechanische oder andere stoffschlüssige Verbindungsarten denkbar. Ebenfalls sind additive Fertigungsverfahren denkbar, mit denen der Formkörper hergestellt werden kann.

Der Gleitlagerverbundwerkstoff oder der dreidimensionale Formkörper können als Gleitlagerelement eingesetzt werden, wobei ein Gleitlagerelement beispielsweise eine Gleitleiste, ein Gleitschuh, ein Gleitkissen sowie eine Gleitlagerschale, eine Gleitlagerbuchse oder eine Gleitlagerbundbuchse sein kann. Bei einem Gleitschuh oder einer Gleitleiste betragen die Abmessungen des Formkörpers in jeder Dimension mindestens 1 mm, insbesondere mindestens 2 mm und weiter insbesondere mindestens 5 mm oder mindestens 6 mm. Selbstverständlich können die Abmessungen demgegenüber auch sehr viel größer sein. Grundsätzlich sind auch Schalenformen, wie insbesondere Kugelschalenformen, Buchsen- oder Bundbuchsen sowie weitere Bauteile bei der Verwendung des Formkörpers denkbar.

Bei Gleitelementen kann es sich darüber hinaus auch um typischerweise gerollte zylindrische Buchsen oder halbschalenförmige Gleitlagerelemente handeln, die mit dem Gleitlagerverbundwerkstoff hergestellt werden. Der Gleitlagerverbundwerkstoff kann auch zur Herstellung von Bundbuchsen oder Topfbuchsen oder ebenen und sphärischen Gleitlagerelementen eingesetzt werden.

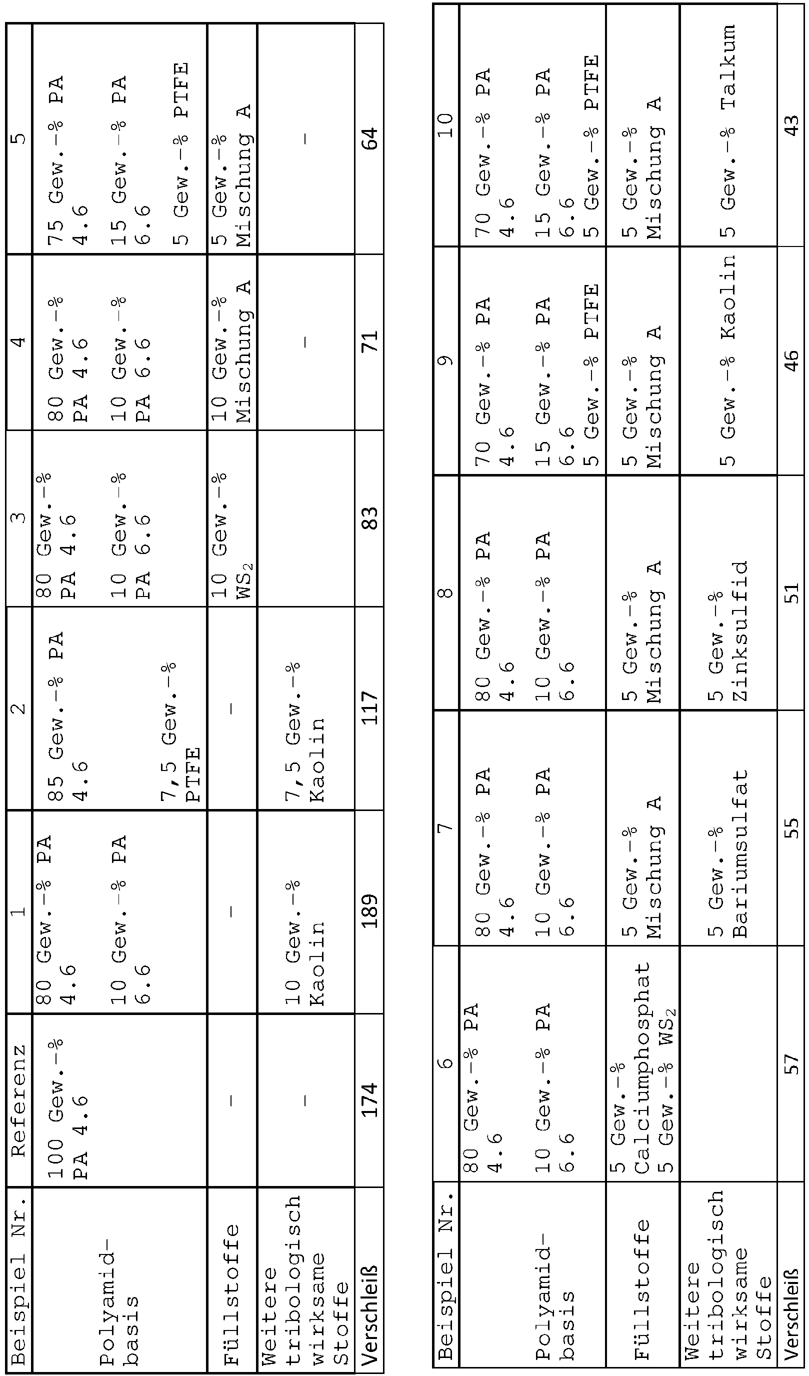

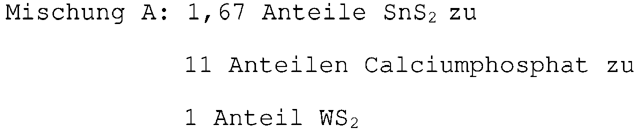

Die Verschleißwerte in µm sind in der nachfolgenden Abbildung aufgetragen zusammen mit den Parametern der Messung:

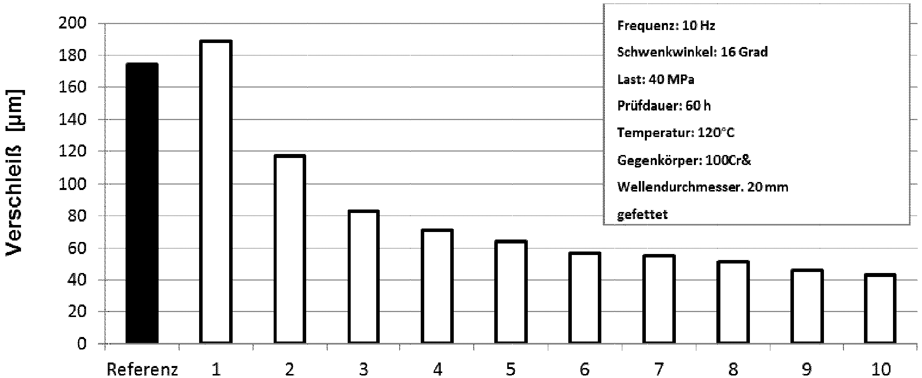

Der Abbildung kann entnommen werden, dass die Zugabe von Füllstoffen der Mischung A oder die Zugabe von Calciumphosphat zusammen mit WS₂ bzw. die Zugabe von WS₂ alleine als beispielhaftes Metallsulfid die Verschleißwerte deutlich senkt und damit die Verschleißfestigkeit verbessert.

Die vorstehend dargestellten Beispiele 4 bis 10 stellen bevorzugte Zusammensetzungen des erfindungsgemäßen Gleitmaterials dar, wobei die Polyamidbasis aus zwei verschiedenen Polyamiden mit Schwerpunkt PA 4.6 sowie teilweise PTFE gebildet ist und hierzu Anteile von 5 Gew.-% oder 10 Gew.-% einer Mischung A von Zinndisulfid, Calciumphosphat und Wolframdisulfid im Verhältnis 5:33:3 Gew.-% zugegeben wurde sowie teilweise ein weiterer tribologisch wirksamer Stoff, wie beispielsweise 5 Gew.-% Bariumsulfat, Zinksulfid, Kaolin oder Talkum in den Beispielen 7-10. Eine alternative Zusammensetzung der Füllstoffe ist in den Beispielen 3 und 6 gezeigt. Die Beispiele 1 bis 3 sind Vergleichsbeispiele. Ein Gleitmaterial aus PA 4.6 ohne Füllstoffe und weitere Bestandteile dient als Referenz.

## Patentansprüche

1. Gleitmaterial auf Polyamidbasis mit die tribologischen Eigenschaften verbessernden Füllstoffen, **dadurch gekennzeichnet, dass** die Füllstoffe mindestens ein Metallsulfid und Calciumphosphat umfassen und dass der Anteil an dem mindestens einen Metallsulfid und Calciumphosphat in Summe 1 - 30 Gew.-% des Gleitmaterials beträgt und dass die Gewichtsverhältnisse von Calciumphosphat zu Metallsulfid zwischen 5:1 und 1:1 betragen.

2. Gleitmaterial nach Anspruch 1, **dadurch gekennzeichnet, dass** die Polyamidbasis des Gleitmaterials mindestens 70 Gew.-%, insbesondere mindestens 80 Gew.-%, insbesondere mindestens 90 Gew.-% und insbesondere 100 Gew.-% Polyamid umfasst.

3. Gleitmaterial nach Anspruch 1 oder 2, **dadurch gekennzeichnet, dass** die Polyamidbasis PA 4.6 umfasst und insbesondere mindestens zu 60 Gew.-% insbesondere mindestens zu 70 Gew.-%, insbesondere mindestens zu 80 Gew.-%, insbesondere mindestens zu 90 Gew.-% und insbesondere zu 100 Gew.-% aus PA 4.6 besteht.

4. Gleitmaterial nach einem der Ansprüche 1 bis 3, **dadurch gekennzeichnet, dass** die Polyamidbasis 0 - 40 Gew.-%, insbesondere 1 - 30 Gew.-% und insbesondere 5 - 20 Gew.-% weitere, von PA 4.6 verschiedene Polyamide umfasst, insbesondere, PA 6 und/oder PA 6.6.

5. Gleitmaterial nach einem oder mehreren der vorangehenden Ansprüche, **dadurch gekennzeichnet, dass** der Anteil an dem mindestens einen Metallsulfid und Calciumphosphat in Summe 1 - 20 Gew.-% und insbesondere 5 - 15 Gew.-%, insbesondere 5 Gew.-% oder 10 Gew.-% des Gleitmaterials beträgt.

6. Gleitmaterial nach einem oder mehreren der vorangehenden Ansprüche, **dadurch gekennzeichnet dass** das mindestens eine Metallsulfid SnS₂, MoS₂, Bismutsulfid oder WS₂ sowie Kombinationen hiervon umfasst.

7. Gleitmaterial nach Anspruch 6, **dadurch gekennzeichnet, dass** die Füllstoffe folgende Zusammensetzung umfassen:
2-20 Gew.-% SnS₂,
70-97 Gew.-% Calciumphosphat
1-10 Gew.-% WS₂.

8. Gleitmaterial nach Anspruch 6 oder 7, **dadurch gekennzeichnet, dass** die Gewichtsverhältnisse
1-3 SnS₂ zu
9-13 Calciumphosphat zu
1 WS₂, und insbesondere
1, 67 SnS₂ zu
11 Calciumphosphat zu
1 WS₂ betragen.

9. Gleitmaterial nach einem oder mehreren der Ansprüche 1 bis 6, **dadurch gekennzeichnet, dass** die Füllstoffe folgende Zusammensetzung bezogen auf das Gleitmaterial aufweisen:
5 Gew.-% Calciumphosphat
5 Gew.-% WS₂.

10. Gleitmaterial nach einem oder mehreren der vorangehenden Ansprüche, **dadurch gekennzeichnet, dass** die Füllstoffe weitere tribologisch wirksame Stoffe umfassen und als weitere tribologisch wirksame Stoffe Verstärkungsstoffe, wie insbesondere Kohlenstofffasern, Glasfasern, Polymerfasern (insbesondere Aramidfasern); und/oder Festschmierstoffe, wie insbesondere PTFE, ZnS, BaSO₄, Graphit, Ruß, BN und/oder Kunststoffpartikel, wie insbesondere Aramid (PPTA)-, PPSO₂-, PI- und PAI-Partikel, Polyacrylatpartikel (PAR), PBA-Partikel, PBI-Partikel; und/oder Metalloxide, wie insbesondere Fe₂O₃, Al₂O₃, SiO₂, CrO₂, TiO₂, CuO, MgO, ZnO; und/oder Hartstoffpartikel, insbesondere keramische Partikel, wie SiC, Si₃N₄, BC, cubisches BN; und/oder Fluoride, wie insbesondere CaF₂, NaF, AlF₃; und/oder Schichtsilikate, wie insbesondere Kaolin, Glimmer, Wollastonit, Talk, Kieselsäure; und/oder metallische Feinpulver, wie insbesondere Bronze und Wismut; und/oder Pigmente oder Mischphasenoxidpigmente, wie insbesondere Co-Al, Cr-Sb-Ti, Co-Ti, Fe-Al oder Co-Cr enthalten sind.

11. Gleitmaterial nach Anspruch 10, **dadurch gekennzeichnet, dass** der Anteil der weiteren tribologisch wirksamen Stoffe 0 - 40 Gew.-%, insbesondere 1 - 20 Gew.-% und insbesondere 1 - 10 Gew.-%, insbesondere 5 Gew-% des Gleitmaterials beträgt.

12. Gleitmaterial nach Anspruch 10 oder 11, **dadurch gekennzeichnet, dass** als weitere tribologisch wirksame Stoffe 0 - 40 Gew.-%, insbesondere 1 - 20 Gew.-% und insbesondere 1 - 10 Gew.-%, insbesondere 5 Gew.-% Schichtsilikate, insbesondere Kaolin und/oder Kieselsäure und/oder Festschmierstoffe, insbesondere BaSO₄ und/oder ZnS vorgesehen sind.

13. Gleitmaterial nach einem oder mehreren der vorangehenden Ansprüche, **dadurch gekennzeichnet, dass** die Polyamidbasis 50 - 95 Gew.-%, insbesondere 60 - 95 Gew.-% und insbesondere 70 - 90 Gew.-% des Gleitmaterials ausmacht.

14. Gleitlagerverbundwerkstoff mit einer metallischen Stützschicht, insbesondere aus Stahl oder Bronze, insbesondere mit einer porösen Trägerschicht, insbesondere aus Bronze, und mit einem die Poren der Trägerschicht ausfüllenden Gleitmaterial nach einem oder mehreren der vorstehenden Ansprüche 1 bis 13.

15. Dreidimensionaler Formkörper für gleitende Beanspruchung bestehend aus einem Gleitmaterial nach einem oder mehreren der vorstehenden Ansprüche 1 bis 13, insbesondere als Spritzguss- oder Extrusionsteil und/oder durch additive Fertigung hergestellt.

16. Gleitlagerelement hergestellt aus einem Gleitlagerverbundwerkstoff nach Anspruch 14 oder umfassend einen Formkörper nach Anspruch 15.

17. Gleitlagerelement nach Anspruch 16, **dadurch gekennzeichnet, dass** es eine Gleitleiste, ein Gleitschuh oder Gleitkissen oder ein Gleitlagerschale, eine Gleitlagerbuchse oder -bundbuchse ist.

## Claims

1. Polyamide-based sliding material, having fillers that improve the tribological properties, **characterized in that** the fillers comprise at least one metal sulfide and calcium phosphate **in that** the portion of the at least one metal sulfide and calcium phosphate totals 1 - 30% w/w of the sliding material and **in that** the weight ratios of calcium phosphate to metal sulfide lie between 5:1 and 1:1.

2. Sliding material according to claim 1, **characterized in that** the polyamide base of the sliding material comprises at least 70% w/w, particularly at least 80% w/w, particularly at least 90% w/w, and particularly 100 % w/w polyamide.

3. Sliding material according to claim 1 or 2, **characterized in that** the polyamide base comprises PA 4.6 and particularly consists at least to 60% w/w, particularly at least to 70% w/w, particularly at least to 80% w/w, particularly at least to 90% w/w, and particularly to 100% w/w of PA 4.6.

4. Sliding material according to one of the claims 1 to 3, **characterized in that** the polyamide base comprises 0 - 40% w/w, particularly 1 - 30% w/w, and particularly 5 - 20% w/w of further polyamides, which differ from PA 4.6, particularly PA 6 and/or PA 6.6.

5. Sliding material according to one or more of the previous claims, **characterized in that** the portion of the at least one metal sulfide and calcium phosphate totals 1 - 20% w/w, and particularly 5 - 15% w/w, particularly 5% w/w or 10% w/w of the sliding material.

6. Sliding material according to one or more of the previous claims, **characterized in that** the at least one metal sulfide comprises SnS₂, MoSₛ, bismuth sulfide, or WS₂, and combinations thereof.

7. Sliding material according to claim 6, **characterized in that** the fillers comprise the following composition:
2-20 % w/w SnS₂,
70-97 % w/w calcium phosphate
1-10 % w/w WS₂.

8. Sliding material according to claim 6 or 7, **characterized in that** the weight ratios are
1-3 SnS₂ to
9-13 calcium phosphate to
1 WS₂, and particularly
1.67 SnS₂ to
11 calcium phosphate to
1 WS₂.

9. Sliding material according to one or more of the claims 1 to 6, **characterized in that**, in terms of the sliding material, the fillers have the following composition:
5 % w/w calcium phosphate
5 % w/w WS₂.

10. Sliding material according to one or more of the previous claims, **characterized in that** the fillers comprise further tribologically effective substances, and as further tribologically effective substances, they contain reinforcing materials, particularly such as carbon fibers, glass fibers, polymer fibers (particularly aramid fibers); and/or solid lubricants, particularly such as PTFE, ZnS, BaSO₄, Graphite, soot, BN and/or plastic particles, particularly such as aramid (PPTA), PPSO₂, PI and PAI particles, polyacrylate particles (PAR), PBA particles, PBI particles; and/or metal oxides, particularly such as Fe₂O₃, Al₂O₃, SiO₂, CrO₂, TiO₂, CuO, MgO, ZnO; and/or hard material particles, particularly ceramic particles, such as SiC, Si₃N₄, BC, cubic BN; and/or fluorides, particularly such as CaF₂, NaF, AlF₃; and/or sheet silicates, particularly such as kaolin, mica, wollastonite, talcum, silicic acid; and/or metallic fine powders, particularly such as bronze and bismuth; and/or pigments or mixed-phase oxide pigments, particularly such as Co-Al, Cr-Sb-Ti, Co-Ti, Fe-Al, or Co-Cr.

11. Sliding material according to claim 10, **characterized in that** the portion of the further tribologically effective substances is 0 - 40 % w/w, particularly 1 - 20 % w/w, and particularly 1 - 10 % w/w, particularly 5 % w/w of the sliding material.

12. Sliding material according to claim 10 or 11, **characterized in that** 0 - 40 % w/w, particularly 1 - 20 % w/w, and particularly 1 - 10 % w/w, particularly 5 % w/w sheet silicates, particularly kaolin and/or silicic acid and/or solid lubricants, particularly BaSo₄ and/or ZnS, are provided as the further tribologically effective substances.

13. Sliding material according to one or more of the previous claims, **characterized in that** the polyamide base constitutes 50 - 95 % w/w, particularly 60 - 95 % w/w, and particularly 70 - 90 % w/w of the sliding material.

14. Plain-bearing composite material, having a metal support layer, in particular made of steel or bronze, in particular having a porous carrier layer, in particular made of bronze, and a sliding material according to one or more of the previous claims 1 to 13, which fills the pores in the carrier layer.

15. Three-dimensional shaped body for sliding load, consisting of a sliding material according to one or more of the previous claims 1 to 13, in particular produced as an injection-molded or extrusion part and/or by additive manufacturing.

16. Plain-bearing element produced from a plain-bearing composite material according to claim 14 or comprising a shaped body according to claim 15.

17. Plain-bearing element according to claim 16, **characterized in that** it is a sliding strip, a sliding shoe, or a sliding pad, or a plain-bearing shell, a plain-bearing bushing, or a plain-bearing collar bushing.

## Revendications

1. Matériau antifriction à base de polyamide et avec des matières de charge améliorant les propriétés tribologiques, **caractérisé en ce que** les matières de charge comprennent au moins un sulfure métallique et du phosphate de calcium et **en ce que** la proportion du au moins un sulfure métallique et du phosphate de calcium est au total comprise entre 1 et 30 % en poids du matériau antifriction et **en ce que** les rapports en poids du phosphate de calcium sur le sulfure métallique sont compris entre 5:1 et 1:1.

2. Matériau antifriction selon la revendication 1, **caractérisé en ce que** la base de polyamide du matériau antifriction comprend au moins 70 % en poids, en particulier au moins 80 % en poids, en particulier au moins 90 % en poids et en particulier 100 % en poids de polyamide.

3. Matériau antifriction selon la revendication 1 ou 2, **caractérisé en ce que** la base de polyamide comprend du PA 4.6 et en particulier au moins jusqu'à 60 % en poids, en particulier au moins jusqu'à 70 % en poids, en particulier au moins jusqu'à 80 % en poids, en particulier au moins jusqu'à 90 % en poids et en particulier jusqu'à 100 % en poids de PA 4.6.

4. Matériau antifriction selon la revendication 1 à 3, **caractérisé en ce que** la base de polyamide comprend entre 0 et 40 % en poids, en particulier entre 1 et 30 % en poids et en particulier entre 5 et 20 % en poids d'autres polyamides différents du PA 4.6, en particulier de PA 6 et/ou de PA 6.6.

5. Matériau antifriction selon l'une quelconque ou plusieurs des revendications précédentes, **caractérisé en ce que** la proportion du au moins un sulfure métallique et du phosphate de calcium est au total comprise entre 1 et 20 % en poids et en particulier entre 5 et 15 % en poids du matériau antifriction, et est en particulier de 5 % en poids ou de 10 % en poids du matériau antifriction.

6. Matériau antifriction selon l'une quelconque ou plusieurs des revendications précédentes, **caractérisé en ce que** le au moins un sulfure métallique comprend SnS₂, MoS₂, sulfure de bismuth ou WS₂ et leurs combinaisons.

7. Matériau antifriction selon la revendication 6, **caractérisé en ce que** les matières de charge comprennent la composition suivante:
entre 2 et 20 % en poids de SnS₂,
entre 70 et 97 % en poids de phosphate de calcium
entre 1 et 10 % en poids de WS₂.

8. Matériau antifriction selon la revendication 6 ou 7, **caractérisé en ce que** les rapports en poids sont de
là 3 de SnS₂ sur
9 à 13 de phosphate de calcium sur
1 de WS₂, et en particulier de
1.67 SnS₂ sur
11 de phosphate de calcium sur
1 de WS₂.

9. Matériau antifriction selon l'une quelconque ou plusieurs des revendications 1 à 6, **caractérisé en ce que** les matières de charge présentent la composition suivante par rapport au matériau antifriction:
5 % en poids de phosphate de calcium
5 % en poids de WS₂.

10. Matériau antifriction selon l'une quelconque ou plusieurs des revendications précédentes, **caractérisé en ce que** les matières de charge comprennent d'autres matières tribologiquement actives et **en ce que** des matières de renforcement sont contenues en tant qu'autres matières tribologiquement actives, comme en particulier des fibres de carbone, des fibres de verre, des fibres polymères (en particulier des fibres d'aramide); et/ou des lubrifiants solides, comme en particulier PTFE, ZnS, BaSO₄, graphite, noir de carbone, BN et/ou des particules de plastique, comme en particulier des particules d'aramide (PPTA), de PPSO₂, de PI et de PAI, des particules de polyacrylate (PAR), des particules de PBA, des particules de PBI; et/ou des oxydes métalliques, comme en particulier Fe₂O₃, Al₂O₃, SiO₂, CrO₂, TiO₂, CuO, MgO, ZnO; et/ou des particules de matériau dur, en particulier des particules de céramique, comme SiC, Si₃N₄, BC, BN cubique; et/ou des fluorures, comme en particulier CaF₂, NaF, AlF₃; et/ou des phyllosilicates, comme en particulier du kaolin, du mica, de la wollastonite, du talc, de la silice; et/ou des poudres métalliques fines, comme en particulier du bronze et du bismuth; et/ou des pigments ou des pigments à base d'oxydes en phase mixte, comme en particulier Co-Al, Cr-Sb-Ti, Co-Ti, Fe-Al ou Co-Cr.

11. Matériau antifriction selon la revendication 10, **caractérisé en ce que** la proportion des autres matières tribologiquement actives est comprise entre 0 et 40 % en poids, en particulier entre 1 et 20 % en poids et en particulier entre 1 et 10 % en poids du matériau antifriction, et est en particulier de 5 % en poids du matériau antifriction.

12. Matériau antifriction selon la revendication 10 ou 11, **caractérisé en ce qu'**il est prévu entre 0 et 40 % en poids, en particulier entre 1 et 20 % en poids et en particulier entre 1 et 10 % en poids, en particulier 5 % en poids, de phyllosilicates, en particulier de kaolin et/ou de silice et/ou de lubrifiants solides, en particulier de BaS0₄ et/ou de ZnS, en tant qu'autres matières tribologiquement actives.

13. Matériau antifriction selon l'une quelconque ou plusieurs des revendications précédentes, **caractérisé en ce que** la base de polyamide représente entre 50 et 95 % en poids, en particulier entre 60 et 95 % en poids et en particulier entre 70 et 90 % en poids du matériau antifriction.

14. Matériau composite pour palier antifriction avec une couche formant coussinet métallique, en particulier en acier ou en bronze, en particulier avec une couche de support poreuse, en particulier en bronze, et avec un matériau antifriction selon l'une quelconque ou plusieurs des revendications 1 à 13 précédentes remplissant les pores de la couche de support.

15. Corps moulé tridimensionnel destiné à subir une contrainte frictionnelle et constitué d'un matériau antifriction selon l'une quelconque ou plusieurs des revendications 1 à 13 précédentes, en particulier réalisé sous forme de pièce moulée par injection ou extrudée et/ou par fabrication additive.

16. Elément de palier antifriction fabriqué en matériau composite pour palier antifriction selon la revendication 14 ou comprenant un corps moulé selon la revendication 15.

17. Elément de palier antifriction selon la revendication 16, **caractérisé en ce qu'**il s'agit d'une bande antifriction, d'un patin antifriction ou d'un coussin antifriction ou d'un coussinet de palier antifriction, d'une bague de palier antifriction ou d'une douille à collet de palier antifriction.
